# EUROPEAN PATENT APPLICATION

(11) **EP 4 636 232 A1**
(43) Date of publication of application: **22.10.2025**
(21) Application number: 25170419.3
(22) Date of filing: 14.04.2025
(51) Int. Cl.: F02C 1/00, F02C 1/04, F02C 1/10, F02C 7/14

(54) **BOTTOMING CYCLE FOR POWER GENERATION AND ENGINE THERMAL MANAGEMENT**

(30) Priority: 19.04.2024 US 202418640211
(71) Applicant: RTX Corporation, Farmington, CT 06032 (US)
(72) Inventor: Wood, Joshua V., South Glastonbury, 06073 (US)
(74) Representative: Schmitt-Nilson Schraud Waibel Wohlfrom Patentanwälte Partnerschaft mbB

(57) **Abstract**

A hybrid electric bottoming cycle including an auxiliary shaft supporting a bottoming cycle compressor and turbine; a working fluid/oil heat exchanger fluidly coupled between the compressor and turbine; a waste heat recovery heat exchanger fluidly coupled between the bottoming cycle turbine and compressor; a working fluid/fuel heat exchanger fluidly coupled between the bottoming cycle turbine and compressor, a bottoming cycle working fluid fluidly coupled with the compressor, the working fluid/oil heat exchanger, the waste heat recovery heat exchanger, the turbine and working fluid/fuel heat exchanger; a bottoming cycle motor generator in operative communication with the auxiliary shaft, wherein the bottoming cycle motor generator is configured to rotate the auxiliary shaft responsive to a predetermined gas turbine engine condition and generate electrical power responsive to another predetermined gas turbine engine condition; and an electrical power source in operative communication with the bottoming cycle motor generator.

## Description

The present disclosure is directed to an improved hybrid electric bottoming cycle.

Electric actuation is beneficial to a gas turbine engine in many ways but requires significant electrical power. Once the power needs are addressed, the resulting weight increase and horsepower extraction on the engine often cancels out any system level benefits.

In accordance with the present disclosure, there is provided a hybrid electric bottoming cycle comprising an auxiliary shaft supporting a bottoming cycle compressor; the auxiliary shaft supporting a bottoming cycle turbine; a working fluid to oil heat exchanger fluidly coupled between the bottoming cycle compressor and the bottoming cycle turbine, wherein the working fluid to oil heat exchanger is downstream of the bottoming cycle compressor and upstream of the bottoming cycle turbine; a waste heat recovery heat exchanger fluidly coupled between the bottoming cycle turbine and the bottoming cycle compressor, wherein the waste heat recovery heat exchanger is downstream of the working fluid to oil heat exchanger and upstream of the bottoming cycle turbine; a working fluid to fuel heat exchanger fluidly coupled between the bottoming cycle turbine and the bottoming cycle compressor, wherein the working fluid to fuel heat exchanger is downstream of bottoming cycle turbine and upstream of the bottoming cycle compressor; a bottoming cycle working fluid fluidly coupled with the bottoming cycle compressor, the working fluid to oil heat exchanger, the waste heat recovery heat exchanger, the bottoming cycle turbine and working fluid to fuel heat exchanger; a bottoming cycle motor generator in operative communication with the auxiliary shaft, wherein the bottoming cycle motor generator is configured to at least one of produce mechanical rotary shaft energy into the auxiliary shaft responsive to a predetermined gas turbine engine condition and generate electrical power responsive to another predetermined gas turbine engine condition; and an electrical power source in operative communication with the bottoming cycle motor generator.

Particular embodiments further may include at least one, or a plurality of, the following optional features, alone or in combination with each other:

A further embodiment of any of the foregoing embodiments may additionally and/or alternatively include the bottoming cycle motor generator is in operative communication with a controller.

A further embodiment of any of the foregoing embodiments may additionally and/or alternatively include the hybrid electric bottoming cycle further comprising a fuel bypass valve fluidly coupled to a fuel line between the working fluid to fuel heat exchanger and a fuel tank.

A further embodiment of any of the foregoing embodiments may additionally and/or alternatively include the hybrid electric bottoming cycle further comprising a fuel pump fluidly coupled to a fuel line between the fuel bypass valve and a fuel tank.

A further embodiment of any of the foregoing embodiments may additionally and/or alternatively include the hybrid electric bottoming cycle further comprising a fan heat exchanger fluidly coupled between the bottoming cycle turbine and the bottoming cycle compressor, wherein the fan heat exchanger is downstream of the working fluid to fuel heat exchanger and upstream of the bottoming cycle compressor.

A further embodiment of any of the foregoing embodiments may additionally and/or alternatively include the hybrid electric bottoming cycle further comprising a gearbox in operative communication with the motor generator, wherein the gearbox is in operative communication with components within the gas turbine engine.

A further embodiment of any of the foregoing embodiments may additionally and/or alternatively include the predetermined gas turbine engine condition comprises an operating state demanding the electrical power.

In accordance with the present disclosure, there is provided a hybrid electric bottoming cycle for a gas turbine engine comprising an auxiliary shaft supporting a bottoming cycle compressor; the auxiliary shaft supporting a bottoming cycle turbine; a working fluid to oil heat exchanger fluidly coupled between the bottoming cycle compressor and the bottoming cycle turbine, wherein the working fluid to oil heat exchanger is downstream of the bottoming cycle compressor and upstream of the bottoming cycle turbine, the working fluid to oil heat exchanger being fluidly coupled to a gas turbine lubrication oil; a waste heat recovery heat exchanger fluidly coupled between the bottoming cycle turbine and the bottoming cycle compressor, wherein the waste heat recovery heat exchanger is downstream of the working fluid to oil heat exchanger and upstream of the bottoming cycle turbine, the waste heat recovery heat exchanger fluidly coupled to a gas turbine air stream and located downstream from a low pressure turbine; a working fluid to fuel heat exchanger fluidly coupled between the bottoming cycle turbine and the bottoming cycle compressor, wherein the working fluid to fuel heat exchanger is downstream of bottoming cycle turbine and upstream of the bottoming cycle compressor, the working fluid to fuel heat exchanger fluidly coupled between a fuel tank and a combustor in the gas turbine engine; a bottoming cycle working fluid fluidly coupled with the bottoming cycle compressor, the working fluid to oil heat exchanger, the waste heat recovery heat exchanger, the bottoming cycle turbine and working fluid to fuel heat exchanger; a bottoming cycle motor generator in operative communication with the auxiliary shaft, wherein the bottoming cycle motor generator is configured to at least one of produce mechanical rotary shaft energy into the auxiliary shaft responsive to a predetermined gas turbine engine condition and generate electrical power responsive to another predetermined gas turbine engine condition; and an electrical power source in operative communication with the bottoming cycle motor generator.

Particular embodiments further may include at least one, or a plurality of, the following optional features, alone or in combination with each other:

A further embodiment of any of the foregoing embodiments may additionally and/or alternatively include the hybrid electric bottoming cycle for a gas turbine engine further comprising a controller in operative communication with the motor generator.

A further embodiment of any of the foregoing embodiments may additionally and/or alternatively include the hybrid electric bottoming cycle for a gas turbine engine further comprising a fuel bypass valve fluidly coupled to a fuel line between the working fluid to fuel heat exchanger and the fuel tank, wherein the fuel tank is fluidly coupled to the combustor in the gas turbine engine; and a fuel pump fluidly coupled to the fuel line between the fuel bypass valve and the fuel tank.

A further embodiment of any of the foregoing embodiments may additionally and/or alternatively include the hybrid electric bottoming cycle for a gas turbine engine further comprising a fan heat exchanger fluidly coupled between the bottoming cycle turbine and the bottoming cycle compressor, wherein the fan heat exchanger is downstream of the working fluid to fuel heat exchanger and upstream of the bottoming cycle compressor; wherein the fan heat exchanger removes thermal energy from the bottoming cycle working fluid transferring the thermal energy to air discharged from the fan.

A further embodiment of any of the foregoing embodiments may additionally and/or alternatively include the hybrid electric bottoming cycle for a gas turbine engine further comprising a gearbox in operative communication with the motor generator, wherein the gearbox is in operative communication with components within the gas turbine engine.

A further embodiment of any of the foregoing embodiments may additionally and/or alternatively include the hybrid electric bottoming cycle for a gas turbine engine wherein the bottoming cycle turbine is configured to expand the bottoming cycle working fluid through the bottoming cycle turbine and produce rotary shaft energy, the bottoming cycle turbine being configured to input the rotary shaft energy into the auxiliary shaft.

In accordance with the present disclosure, there is provided a process for a hybrid electric bottoming cycle for a gas turbine engine comprising supporting a bottoming cycle compressor with an auxiliary shaft; supporting a bottoming cycle turbine with the auxiliary shaft; fluidly coupling a working fluid to oil heat exchanger between the bottoming cycle compressor and the bottoming cycle turbine, wherein the working fluid to oil heat exchanger is downstream of the bottoming cycle compressor and upstream of the bottoming cycle turbine; fluidly coupling the working fluid to oil heat exchanger to a gas turbine lubrication oil; fluidly coupling a waste heat recovery heat exchanger between the bottoming cycle turbine and the bottoming cycle compressor, wherein the waste heat recovery heat exchanger is downstream of the working fluid to oil heat exchanger and upstream of the bottoming cycle turbine; fluidly coupling the waste heat recovery heat exchanger to a gas turbine air stream, and locating the waste heat recovery heat exchanger downstream from a low pressure turbine; fluidly coupling a working fluid to fuel heat exchanger between the bottoming cycle turbine and the bottoming cycle compressor, wherein the working fluid to fuel heat exchanger is downstream of bottoming cycle turbine and upstream of the bottoming cycle compressor; fluidly coupling the working fluid to fuel heat exchanger between a fuel tank and a combustor in the gas turbine engine; fluidly coupling a bottoming cycle working fluid with the bottoming cycle compressor, the working fluid to oil heat exchanger, the waste heat recovery heat exchanger, the bottoming cycle turbine and working fluid to fuel heat exchanger; coupling a bottoming cycle motor generator in operative communication with the auxiliary shaft, configuring the bottoming cycle motor generator to at least one of produce mechanical rotary shaft energy into the auxiliary shaft responsive to a predetermined gas turbine engine condition and generate electrical power responsive to another predetermined gas turbine engine condition; and coupling an electrical power source in operative communication with the bottoming cycle motor generator.

Particular embodiments further may include at least one, or a plurality of, the following optional features, alone or in combination with each other:

A further embodiment of any of the foregoing embodiments may additionally and/or alternatively include the process further comprising coupling a controller in operative communication with the motor generator.

A further embodiment of any of the foregoing embodiments may additionally and/or alternatively include the process further comprising fluidly coupling a fuel bypass valve to a fuel line between the working fluid to fuel heat exchanger and the fuel tank; fluidly coupling the fuel tank to the combustor in the gas turbine engine; and fluidly coupling a fuel pump to the fuel line between the fuel bypass valve and the fuel tank.

A further embodiment of any of the foregoing embodiments may additionally and/or alternatively include the process further comprising fluidly coupling a fan heat exchanger between the bottoming cycle turbine and the bottoming cycle compressor, wherein the fan heat exchanger is downstream of the working fluid to fuel heat exchanger and upstream of the bottoming cycle compressor; removing thermal energy from the bottoming cycle working fluid with the fan heat exchanger; and transferring the thermal energy to air discharged from the fan.

A further embodiment of any of the foregoing embodiments may additionally and/or alternatively include the process further comprising coupling a gearbox in operative communication with the motor generator; and coupling the gearbox in operative communication with components within the gas turbine engine.

A further embodiment of any of the foregoing embodiments may additionally and/or alternatively include the process further comprising expanding the bottoming cycle working fluid through the bottoming cycle turbine to produce rotary shaft energy; and configuring the bottoming cycle turbine to input the rotary shaft energy into the auxiliary shaft.

A further embodiment of any of the foregoing embodiments may additionally and/or alternatively include the process further comprising employing the motor generator during gas turbine engine operation to at least one of: producing mechanical shaft energy through the auxiliary shaft; and utilizing auxiliary shaft rotary power to generate electricity.

Other details of the hybrid electric bottoming cycle are set forth in the following detailed description and the accompanying drawings wherein like reference numerals depict like elements.
Fig. 1 is a cross section view of an exemplary gas turbine engine.
Fig. 2 is a schematic representation of an exemplary hybrid electric bottoming cycle.

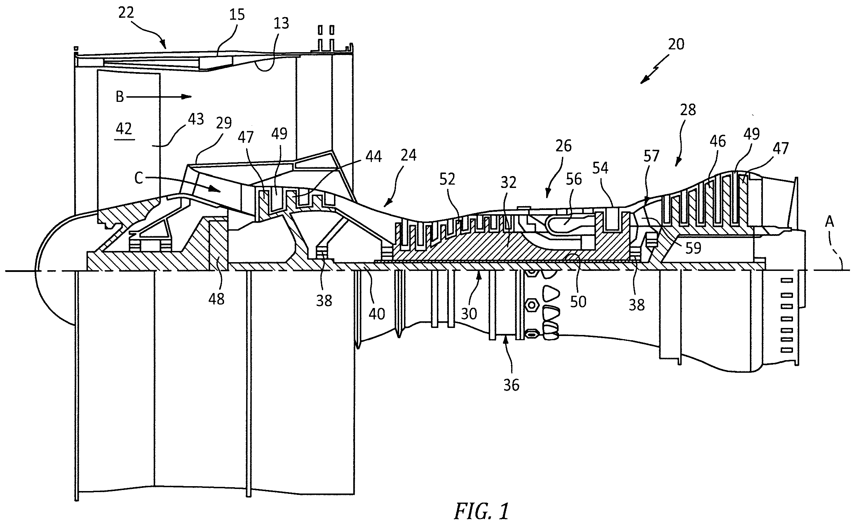

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

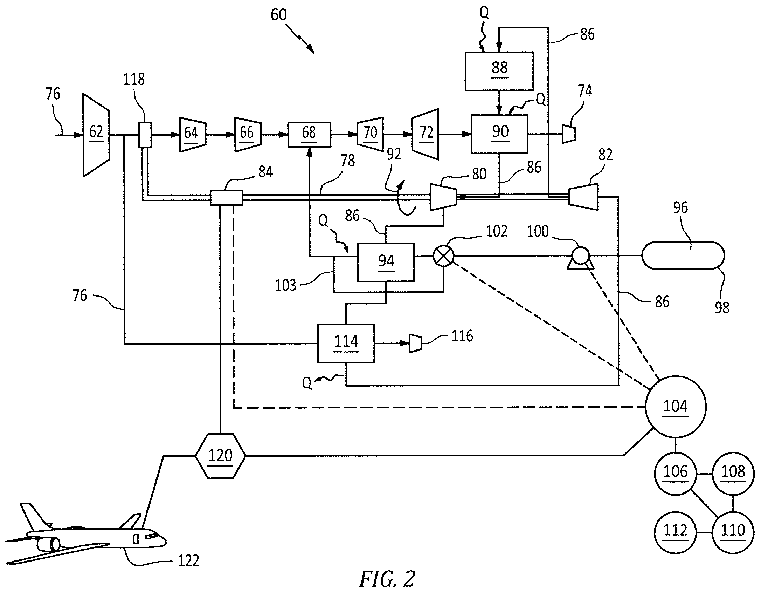

Referring also to Fig. 2, an exemplary hybrid electric bottoming cycle system 60 is shown. The system 60 includes a fan 62 in operative communication with a low pressure compressor 64 and high pressure compressor 66 and combustor/burner 68. The system 60 also includes a high pressure turbine 70 in operative communication with the combustor 68. A low pressure turbine 72 is in operative communication with a high pressure turbine 70. A core nozzle is in operative communication with the low pressure turbine 72.

An air inlet stream 76 enters the fan 62 and passes through the system 60 to supply the various components with air.

An auxiliary shaft 78 supports a bottoming cycle turbine 80. The auxiliary shaft 78 supports a bottoming cycle compressor 82. The auxiliary shaft 78 also supports a bottoming cycle motor generator 84.

The bottoming cycle turbine 80 and bottoming cycle compressor 82 operate with a bottoming cycle working fluid 86. In an exemplary embodiment, the bottoming cycle working fluid 86 can comprise a supercritical carbon dioxide (sCO2).

A bottoming cycle working fluid to oil heat exchanger 88 can be fluidly coupled downstream from the compressor 82 and upstream from a waste heat recovery heat exchanger 90. The waste heat recovery heat exchanger 90 can be in fluid communication downstream of the low pressure turbine 72 and upstream of the core nozzle 74. Lubrication oil 92 flowing through the working fluid/oil heat exchanger 88 transfers thermal energy Q into the working fluid 86.

Additionally, thermal energy Q from waste heat in the air stream 76 flowing through the waste heat recovery heat exchanger 90 is transferred into the working fluid 86.

The working fluid 86 can expand through the bottoming cycle turbine 80 and produce rotary shaft energy 92. The bottoming cycle turbine 80 inputs the rotary shaft energy 92 into the auxiliary shaft 78.

The working fluid 86 can discharge from the bottoming cycle turbine 80 and flow through a working fluid to fuel heat exchanger 94. The warmer working fluid 86 can transfer thermal energy Q into fuel 96. The fuel 96 can be fed along a fuel line 97 from a fuel tank 98 through a fuel pump 100 through the working fluid/fuel heat exchanger 94 and ultimately to the combustor 68. In an exemplary embodiment, the working fluid/fuel heat exchanger 94 can replace a fuel to oil cooler (not shown).

A fuel bypass valve 102 can be fluidly coupled with the fuel line 97 upstream of the working fluid/fuel heat exchanger 94. The fuel bypass valve 102 can divert fuel 96 around the working fluid/fuel heat exchanger 94 through a fuel bypass line 103 to directly supply fuel 96 to the combustor 68. The fuel bypass valve 102 can be in operative communication with a controller 104. The controller 104 can also be in operative communication with the fuel pump 100. The fuel 96 can be pumped by electrical drive at the fuel pump 100. The fuel 96 and fuel pump 100 can be direct metered for higher engine control accuracy and improved fuel burn.

The controller 104 may include hardware, firmware, and/or software components that are configured to perform the functions disclosed herein, including the functions of the bypass valve 102, fuel pump 100 and the motor generator 84. While not specifically shown, the controller 104 may include other computing devices (e.g., servers, mobile computing devices, etc.) which may be in communication with each other and/or the controller 104 via a communication network 106 to perform one or more of the disclosed functions. The controller may include at least one processor 108 (e.g., a controller, microprocessor, microcontroller, digital signal processor, etc.), memory 110, and an input/output (I/O) subsystem 112. The controller 104 may be embodied as any type of computing device e.g., a server, an enterprise computer system, a network of computers, a combination of computers and other electronic devices, or other electronic devices. Although not specifically shown, the I/O subsystem 112 typically includes, for example, an I/O controller, a memory controller, and one or more I/O ports. The processor 108 and the I/O subsystem 112 are communicatively coupled to the memory 110. The memory 110 may be embodied as any type of computer memory device (e.g., volatile memory such as various forms of random access memory).

The controller 104 can influence the last measured fuel temperature (TF2) as well as the measured oil temperature (MOT) independently. The fuel bypass valve 102 along with the working fluid/fuel heat exchanger 94 can be employed to control the TF2 and MOT.

The bottoming cycle working fluid 86 can be directly returned to the compressor 82 and repeat the flow path discussed above. In an exemplary embodiment, a fan heat exchanger 114 can be fluidly coupled downstream of the working fluid/fuel heat exchanger 94 and upstream of the compressor 82. The fan heat exchanger 114 can remove thermal energy Q from the bottoming cycle working fluid 86 by use of air 76 taken downstream of the fan 62 flowing through the fan heat exchanger 114 to a fan nozzle 116.

The motor generator 84 can be in operative communication with a gearbox 118. The gearbox 118 can be in operative communication with the fan 76 and low pressure compressor 64.

An electrical power source 120 can be operative communication with the motor/generator 84 and controller 104. The motor generator 84 can be electrically driven to create rotary shaft energy 92. The motor generator 84 can be employed to start the bottoming cycle system 60. The rotary shaft energy 92 taken from the bottoming cycle turbine 80 can drive the motor generator 84 to generate electricity that can be utilized to drive the electric fuel pump 100, the bypass valve 102 and various other components of the gas turbine engine 20.

The bottoming cycle motor/generator 84 can be configured to at least one of produce mechanical rotary shaft energy into the auxiliary shaft 78, responsive to a predetermined gas turbine engine 20 condition and/or generate electrical power responsive to another predetermined gas turbine engine 20 condition. The motor/generator 84 can be dynamically controlled by the controller 104 during various gas turbine engine 20 and aircraft 122 operating conditions. The controller 104 can employ the motor/generator 84 at different times during operations to either produce the mechanical shaft energy to the auxiliary shaft 78 or to utilize the auxiliary shaft 78 rotary power to generate electricity. In certain predetermined gas turbine engine conditions, such as a high demand for electrical energy on the aircraft 122, the motor/generator 84 can be employed to generate electricity by employing shaft work from the auxiliary shaft 78.

The hybrid electric bottoming cycle system 60 can be sized as a waste heat recovery system sized for about 400kW. The hybrid electric bottoming cycle system 60 can be sized to produce engine supplied electrical power to the aircraft 122 as well as electro-mechanical actuator (not shown) and fuel pumping loads. The hybrid electric bottoming cycle system 60 can be an all-electric actuation system.

A technical advantage of the disclosed hybrid electric bottoming cycle can include utilizing a bottoming cycle to provide only the power needed, minimizing weight but also providing higher efficiency power generation versus direct horsepower extraction.

Another technical advantage of the disclosed hybrid electric bottoming cycle can include employing the working fluid of the bottoming cycle as a thermal management fluid to allow for a more favorable architecture.

Another technical advantage of the disclosed hybrid electric bottoming cycle can include providing the power to allow electric actuation, as well as providing an improved thermal management system by utilizing the super critical CO2 loop of the bottoming cycle.

Another technical advantage of the disclosed hybrid electric bottoming cycle can include the capacity to decouple the oil thermal management and fuel thermal management allowing for better tuning of those systems to enhance durability and system design.

Another technical advantage of the disclosed hybrid electric bottoming cycle can include a bottoming cycle which generates power from the waste heat of the gas turbine and is therefore much more efficient than using horsepower extraction to power the electrical systems.

Another technical advantage of the disclosed hybrid electric bottoming cycle can include a bottoming cycle that is sized only for the power needed and is therefore lighter than other concepts.

Bottoming cycles extract waste heat from the engine and use the waste heat to generate both shaft and electrical power. The bottoming cycle equipment can be sized to extract most of the heat and therefore come with a large weight penalty.

There has been provided a hybrid electric bottoming cycle. While the hybrid electric bottoming cycle has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A hybrid electric bottoming cycle comprising:
an auxiliary shaft supporting a bottoming cycle compressor;
the auxiliary shaft supporting a bottoming cycle turbine;
a working fluid to oil heat exchanger fluidly coupled between the bottoming cycle compressor and the bottoming cycle turbine, wherein the working fluid to oil heat exchanger is downstream of the bottoming cycle compressor and upstream of the bottoming cycle turbine;
a waste heat recovery heat exchanger fluidly coupled between the bottoming cycle turbine and the bottoming cycle compressor, wherein the waste heat recovery heat exchanger is downstream of the working fluid to oil heat exchanger and upstream of the bottoming cycle turbine;
a working fluid to fuel heat exchanger fluidly coupled between the bottoming cycle turbine and the bottoming cycle compressor, wherein the working fluid to fuel heat exchanger is downstream of bottoming cycle turbine and upstream of the bottoming cycle compressor;
a bottoming cycle working fluid fluidly coupled with the bottoming cycle compressor, the working fluid to oil heat exchanger, the waste heat recovery heat exchanger, the bottoming cycle turbine and working fluid to fuel heat exchanger;
a bottoming cycle motor generator in operative communication with the auxiliary shaft, wherein the bottoming cycle motor generator is configured to at least one of produce mechanical rotary shaft energy into the auxiliary shaft responsive to a predetermined gas turbine engine condition and generate electrical power responsive to another predetermined gas turbine engine condition; and
an electrical power source in operative communication with the bottoming cycle motor generator.

2. The hybrid electric bottoming cycle according to claim 1, wherein the bottoming cycle motor generator is in operative communication with a controller.

3. The hybrid electric bottoming cycle according to claim 1 or 2, further comprising:
a fuel bypass valve fluidly coupled to a fuel line between the working fluid to fuel heat exchanger and a fuel tank; and/or
wherein the fuel tank is fluidly coupled to the
combustor in the gas turbine engine.

4. The hybrid electric bottoming cycle according to any of claims 1 to 3, further comprising:
a fuel pump fluidly coupled to a fuel line between the fuel bypass valve and a fuel tank.

5. The hybrid electric bottoming cycle according to any of claims 1 to 4, further comprising:
a fan heat exchanger fluidly coupled between the bottoming cycle turbine and the bottoming cycle compressor, wherein the fan heat exchanger is downstream of the working fluid to fuel heat exchanger and upstream of the bottoming cycle compressor; and/or
wherein the fan heat exchanger removes thermal energy from the bottoming cycle working fluid transferring the thermal energy to air discharged from the fan.

6. The hybrid electric bottoming cycle according to any of claims 1 to 5, further comprising:
a gearbox in operative communication with the motor generator, wherein the gearbox is in operative communication with components within the gas turbine engine.

7. The hybrid electric bottoming cycle according To any of claims 1 to 6, wherein the predetermined gas turbine engine condition comprises an operating state demanding the electrical power.

8. The hybrid electric bottoming cycle according to any of claims 1 to 7, the hybrid electric bottoming cycle being configured for a gas turbine engine, wherein:
the working fluid to oil heat exchanger is fluidly coupled to a gas turbine lubrication oil;
the waste heat recovery heat exchanger is fluidly coupled to a gas turbine air stream and located downstream from a low pressure turbine; and
the working fluid to fuel heat exchanger is fluidly coupled between a fuel tank and a combustor in the gas turbine engine; the hybrid electric bottoming cycle for a gas turbine engine particularly further comprising the controller in operative communication with the motor generator.

9. The hybrid electric bottoming cycle for a gas turbine engine according to claim 8, wherein the bottoming cycle turbine is configured to expand the bottoming cycle working fluid through the bottoming cycle turbine and produce rotary shaft energy, the bottoming cycle turbine being configured to input the rotary shaft energy into the auxiliary shaft.

10. A process for a hybrid electric bottoming cycle for a gas turbine engine comprising:
supporting a bottoming cycle compressor with an auxiliary shaft;
supporting a bottoming cycle turbine with the auxiliary shaft;
fluidly coupling a working fluid to oil heat exchanger between the bottoming cycle compressor and the bottoming cycle turbine, wherein the working fluid to oil heat exchanger is downstream of the bottoming cycle compressor and upstream of the bottoming cycle turbine;
fluidly coupling the working fluid to oil heat exchanger to a gas turbine lubrication oil;
fluidly coupling a waste heat recovery heat exchanger between the bottoming cycle turbine and the bottoming cycle compressor, wherein the waste heat recovery heat exchanger is downstream of the working fluid to oil heat exchanger and upstream of the bottoming cycle turbine;
fluidly coupling the waste heat recovery heat exchanger to a gas turbine air stream, and locating the waste heat recovery heat exchanger downstream from a low pressure turbine;
fluidly coupling a working fluid to fuel heat exchanger between the bottoming cycle turbine and the bottoming cycle compressor, wherein the working fluid to fuel heat exchanger is downstream of bottoming cycle turbine and upstream of the bottoming cycle compressor;
fluidly coupling the working fluid to fuel heat exchanger between a fuel tank and a combustor in the gas turbine engine;
fluidly coupling a bottoming cycle working fluid with the bottoming cycle compressor, the working fluid to oil heat exchanger, the waste heat recovery heat exchanger, the bottoming cycle turbine and working fluid to fuel heat exchanger;
coupling a bottoming cycle motor generator in operative communication with the auxiliary shaft, configuring the bottoming cycle motor generator to at least one of produce mechanical rotary shaft energy into the auxiliary shaft responsive to a predetermined gas turbine engine condition and generate electrical power responsive to another predetermined gas turbine engine condition; and
coupling an electrical power source in operative communication with the bottoming cycle motor generator.

11. The process of claim 10, further comprising:
coupling a controller in operative communication with the motor generator.

12. The process of claim 10 or 11, further comprising:
fluidly coupling a fuel bypass valve to a fuel line between the working fluid to fuel heat exchanger and the fuel tank;
fluidly coupling the fuel tank to the combustor in the gas turbine engine; and
fluidly coupling a fuel pump to the fuel line between the fuel bypass valve and the fuel tank.

13. The process of any of claims 10 to 12, further comprising:
fluidly coupling a fan heat exchanger between the bottoming cycle turbine and the bottoming cycle compressor, wherein the fan heat exchanger is downstream of the working fluid to fuel heat exchanger and upstream of the bottoming cycle compressor;
removing thermal energy from the bottoming cycle working fluid with the fan heat exchanger; and
transferring the thermal energy to air discharged from the fan.

14. The process of any of claims 10 to 13,
further comprising:
coupling a gearbox in operative communication with the motor generator; and
coupling the gearbox in operative communication with components within the gas turbine engine; and/or
further comprising
expanding the bottoming cycle working fluid through the bottoming cycle turbine to produce rotary shaft energy; and
configuring the bottoming cycle turbine to input the rotary shaft energy into the auxiliary shaft.

15. The process of any of claims 10 to 14, further comprising:
employing the motor generator during gas turbine engine operation to at least one of:
producing mechanical shaft energy through the auxiliary shaft; and
utilizing auxiliary shaft rotary power to generate electricity.
